# EUROPÄISCHE PATENTSCHRIFT

(11) **EP 0 444 559 B1**
(45) Veröffentlichungstag und Bekanntmachung des Hinweises auf die Patenterteilung: **04.05.1994**
(21) Anmeldenummer: 91102709.2
(22) Anmeldetag: 25.02.1991
(51) Int. Cl.: B01J 13/18, B41M 5/165

(54) **Verfahren zur Herstellung von Mikrokapseln**
Process for producing microcapsules
Procédé de production de microcapsules

(30) Priorität: 02.03.1990 DE 4006570
(43) Veröffentlichungstag der Anmeldung: 04.09.1991
(73) Patentinhaber: Papierfabrik August Koehler AG, D-77696 Oberkirch (DE)
(72) Erfinder: Pietsch, Günter, W-3004 Isernhagen 2/HB (DE); Schrader, Karl-Heinz, W-3000 Hannover 1 (DE)
(74) Vertreter: Hagemann, Heinrich, Dr.rer.nat., Dipl.-Chem.

(56) Entgegenhaltungen:
- EP-A- 0 321 750
- DE-A- 3 942 155

## Beschreibung

Die Erfindung betrifft ein Verfahren zur Herstellung von Mikrokapseln durch Mikroverkapselung von hydrophoben Ölen mit darin gelösten oder dispergierten Substanzen, insbesondere von Farbreaktionspartnern von Farbreaktionssystemen, wobei ein die Substanz gelöst oder dispergiert enthaltendes hydrophobes Öl unter starkem Rühren mit einem wässrigen Medium vermischt wird, in der erhaltenen Öl-in-Wasser-Dispersion unter sauren Bedingungen Aminoplastkapseln gebildet und diese gegebenenfalls anschließend isoliert werden, wobei in der sauer eingestellten Öl-in-Wasser-Dispersion mindestens eine dispersionsstabilisierende Verbindung, die kein Reaktivtensid darstellt, enthält.

Ein Verfahren der oben beschriebenen Art geht aus der DE-A-38 18 712 hervor. Der Kern dieses Verfahrens besteht darin, daß das wässrige Medium zur Dispersionsstabilisierung ein wasserlösliches anionisches, sulfoniertes Melamin-Formaldehyd-Vorkondensat sowie eine solche wasserlösliche kationische Verbindung enthält, die in Wechselwirkung miteinander eine dispersionsstabilisierende Verbindung bilden. Als wechselwirkende kationische Verbindung wird ein kationisiertes Melamin-Formaldehyd-Vorkondensat bevorzugt, insbesondere ein solches, das aus einem Oligomeren mit 2 bis 6 Triazinringen besteht, das pro Triazinring 2,5 bis 5 Methylolgruppen enthält und frei von Methylolethergruppen ist. Dieses Verfahren gestattet die Gewinnung von qualitativ hochwertigen trockenen Einzelkapseln aufgrund des Ausschlusses filmbildender Polymerer. Diese Einzelkapseln können in vorteilhaften Lösungsmitteln redispergiert werden. Die erhaltenen Dispersionen lassen sich zum störungsfreien Drucken, Insbesondere zum segmentartigen Drucken, z.B. in den Bereichen des Flexodrucks, Siebdrucks und Tiefdrucks, einsetzen, um nur dort einen Kapselauftrag vorzunehmen, wo später tatsächlich Durchschreibevorgänge ablaufen. Dieses Verfahren ist darauf angewiesen, die dispersionsstabilisierende Verbindung bzw. den dispersonsstabilisierenden Komplex im Rahmen einer Wechselwirkung zwischen zwei verschiedenen Reaktionspartnern herzustellen. In Einzelfällen verlangt es bei der Herstellung der dispersionsstabilisierenden Verbindungen ein Hochleistungsdispergiergerät, um besonders ausgeprägte turbulente Bedingungen einzustellen. Die angesprochenen kationischen Verbindungen als wechselwirkender Reaktionspartner der Dispersionsstabilisierung sind regelmäßig teuer und haben nur eine begrenzte Lagerzeit. Demzufolge müssen sie nach Bezug möglichst schnell verarbeitet werden, was die Flexibilität der Verfahrensführung beeinträchtigt.

Der Erfindung lag daher die Aufgabe zugrunde, das Verfahren der eingangs beschriebenen Art deratig zu verbessern, daß die Dispersionsstabilisierung auf möglichst einfache Art und Weise erfolgt und hierbei auf eine wasserlösliche kationische Verbindung verzichtet werden kann.

Erfindungsgemäß wird diese Aufgabe dadurch gelöst, daß die saure Öl-In-Wasser-Dispersion A) ein wasserlösliches anionisches, sulfoniertes Melamin-Formaldehyd-Vorkondensat und/oder B) ein solches wasserlösliches anionisches modifiziertes Melamin-Formaldehyd-Vorkondensat enthält, das dadurch erhalten worden ist, indem man
a) in einer ersten Stufe Melamin und Formaldehyd bei einer Temperatur zwischen 75 und 100°C in alkalischem Medium und in Gegenwart von Wasser mit wenigstens einer Verbindung (l) in Form eines Alkalisulfits, Erdalkalisulfits, eines Alkalisulfamats, eines Erdalkalisulfamats, einer Aminosulfonsäure, einer Aminocarbonsäure und einer Aminodicarbonsäure zu einem Vorkondensat umsetzt,
b) anschließend in einer zweiten Stufe dieses Vorkondensat bei einem pH-Wert von etwa 5,5 bis 7,0 einer Polykondensation unterwirft, indem man mit wenigstens einer sauren Verbindung (II) in Form von Sulfaminsäure, einer Aminocarbonsäure, einer Aminodicarbonsäure, einer Hydroxycarbonsäure, einer Polyhydroxycarbonsäure und einer Aminosulfonsäure ansäuert, und
c) nach beendigter Polykondensation die erhaltene Harzlösung gegebenenfalls durch Zugabe wenigstens einer basischen Verbindung (III) alkalisch stellt und
d) diese gegebenenfalls alkalische Harzlösung zur Dispersionsstabilisierung in das Verfahren einbezieht, wobei die Verbindungen A) und B) allein dispersionsstabilisierend sind und zur Dispersionsstabilisierung keine wasserlösliche kationische Verbindung herangezogen wird.

Das Wesen des erfindungsgemäßen Verfahrens besteht demzufolge darin, daß die Stabilisierung der wässrigen Dispersion, in der die Kapselwandbildungsmechanismen ablaufen, mit mindestens einer der beiden Verbindungen A) und B) erfolgt. Weitere Reaktionspartner sind zu Dispersionsstabilisierung nicht erforderlich.

Bei der bevorzugten Ausbildung der Erfindung wird in ein angesäuertes wässriges Medium der zur Dispersionsstabilisierung in Frage kommenden beiden Verbindungen A) oder B), die auch in Vermischung eingesetzt werden können, das hydrophobe Öl eingerührt, das irgendeinen Wirkstoff, insbesondere in Form eines Farbbildners eines Reaktionsdurchschreibesystems, enthält. Dies erfolgt vorzugsweise unter starkem Rühren. Hierbei hat es sich gezeigt, daß in diesem sauren Medium die dispersionsstabilisierenden Verbindungen ihre volle Wirksamkeit entfalten. Die Scherkräfte müssen beim Rühren ausreichen, um die wünschenswerte feine Dispergierung der hydrophoben Öltröpfchen in der wässrigen Phase zu erzielen. Bisher war nach dem Stand der Technik, der sich u.a. aus der DE-A-38 18 712 ergibt, davon ausgegangen worden, daß das wasserlösliche anionische, sulfonierte Melamin-Formaldehyd-Vorkondensat zur alleinigen Dispersionsstabilisierung nicht geeignet ist. Dies gilt für die Herstellung der oben beschriebenen Öl-in-Wasser-Dispersion deswegen, weil die im Handel erhältlichen Erzeugnisse (flüssige Dispersionen) alkalisch eingestellt bezogen werden. Rührt man in derartige alkalische Medien das hydrophobe Öl unter starkem Rühren ein, dann bricht die Emulsion unmittelbar nach Beendigung des Rührens. Es bildet sich innerhalb kürzester Zeitspanne eine Zweischichtenstruktur. Überraschenderweise hat es sich gezeigt, daß dann, wenn das stark gerührte wässrige Medium angesäuert wird, beispielsweise auf einen pH-Wert unter 6,5 eine langfristig stabile Emulsion entsteht. Des weiteren war es überraschend, daß nach Zugabe der Wandbildnermaterialien zur Ausbildung der Aminoplastkapselhüllen diese im Hinblick auf die Wandbildung reaktive Öl-in-Wasser-Emulsion nicht bricht, oder einer anderen negativen Veränderung unterliegt, selbst wenn die Kapselwandbildung bereits in ein Stadium eingetreten ist, in dem feste Partikel vorliegen. Das heißt, daß während der gesamten Verfahrensführung durch die Erfindung, d.h. Stabilisierung in saurem Medium unter alleinigem Einsatz der vorstehend bezeichneten Verbindungen, die wünschenswerte Stabilisierung bei der gesamten Verfahrensführung erreicht wird. Es gibt eine Ausnahme im Stand der Technik, bei der ein ursprüngliches Melamin-Formaldehyd-Vorkondensat in feinster Suspendierung ausgefällt und in dieser Feinstsuspendierung die Emulgierung bewirkt wird (vgl. DE-A-37 09 586).

Die im Rahmen der Verbindung eingesetzten wasserlöslichen anionischen, sulfonierten Melamin-Formaldehyd-Vorkondensate sind beispielsweise in der DE-A-38 18 712 und auch in der Zeitschrift "Zement-Kalk-Gips", Bauverlag, Wiesbaden, Jahrgang 21 (1968), Heft 10, S. 415-419 beschrieben. Das erfindungsgemäß eingesetzte Melamin-Formaldehyd-Vorkondensat enthält vorzugsweise pro Melamin-Ring im Mittel etwa 0,7 bis 1,3 Sulfonatgruppen, insbesondere 0,9 bis 1,1 Sulfonatgruppen. Vorzugsweise sind in dem Melamin-Ring im Mittel etwa 2 bis 4 Methylolgruppen, insbesondere etwa 2,5 bis 3,5 Methylolgruppen enthalten. Das Molekulargewicht des sulfonierten Melamin-Formaldehyd-Vorkondensats beträgt vorzugsweise 3000 bis 300 000, insbesondere etwa 5000 bis 100 000. Im Idealfall würde es folgende Struktur haben: 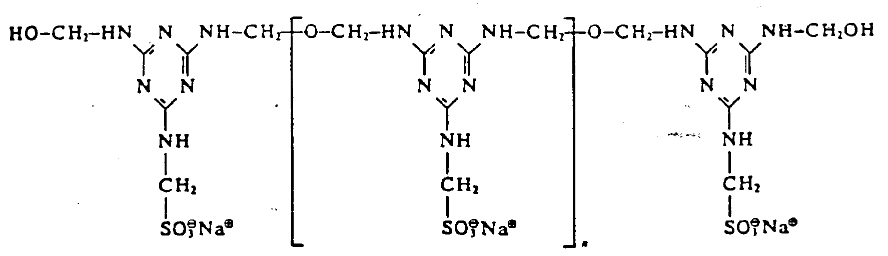
worin n vorzugsweise eine ganze Zahl zwischen 8 und 1000, insbesondere etwa 15 bis 350 darstellt. Dem Natriumion kommt in dieser Formel keine besondere Bedeutung zu. Vielmehr kann es durch beliebige andere Metallionen ersetzt werden, die die Wasserlöslichkeit dieses Vorkondensats gewährleisten.

Anstelle der oben detailliert beschriebenen wasserlöslichen anionischen, sulfonierten Melamin-Formaldehyd-Vorkondensate können auch solche modifizierten Melamin-Formaldehyd-Vorkondensate zur Stabilisierung in dem sauren Medium herangezogen werden, die in der EP-B-0 059 353 und vorstehend als Verbindung B) beschrieben werden. Im Hinblick auf die sich an die Herstellung von B) anschließenden Verfahrensmaßnahmen unterscheidet sich der Einsatz dieses durch die Verfahrensparameter beschriebenen Systems nicht von dem wasserlöslichen anionischen, sulfonierten Melamin-Formaldehyd-Vorkondensat. Bei der Herstellung der erfindungsgemäß einsetzbaren zweiten Verbindung B) wird vorteilhafter wie folgt vorgegangen:

In der ersten Stufe (a) des Verfahrens zur Herstellung der erfindungsgemäß einzusetzenden modifizierten Melamin-Formaldehyd-Vorkondensate B) wird als Aldehyd Formaldehyd eingesetzt, dies als Gas, in Form von Lösungen, vorzugsweise in Form von wässrigen Lösungen oder auch als Festkörper, beispielsweise als Paraformaldehyd.

Vorzugsweise wird in der ersten Stufe der Herstellung der Verbindung B) das Melamin, der Formaldehyd und die Verbindung (l) in einem molaren Verhältnis von etwa 1:3,5 bis 6:0,5 bis 1 eingesetzt. Der pH-Wert beträgt in der ersten Stufe vorzugsweise etwa 9,0 bis 13,0, während die Reaktionstemperatur zwischen 75 und 100°C liegt. Unterhalb 75°C löst sich im allgemeinen das Melamin, z.B. in Wasser, schlecht. Oberhalb 100°C läuft die exotherme Reaktion der ersten Stufe in der Regel so rasch ab, daß unlösliche Harze in unerwünschtem Umfange entstehen können.

In der zweiten Stufe (b) werden das Vorkondensat aus der ersten Stufe und die Verbindungen aus der Gruppe (II) vorzugsweise in einem molaren Verhältnis, bezogen auf das in der ersten Stufe verwendete Melamin, von 1:0,1 bis 3 eingesetzt. Von besonderem Vorteil ist es für die zweite Kondensationsstufe, als Verbindung der Gruppe (II) ein Gemisch aus Sulfaminsäure und Glutaminsäure zu verwenden, insbesondere ein Gemisch aus gleichen Gewichtsteilen Sulfaminsäure und Glutaminsäure. In der zweiten Stufe b) wird durch die Zugabe der Verbindung (II) der pH-Wert auf etwa 5,5 bis 7,0 eingestellt und die Polykondensation weitergeführt, wobei die eingesetzte saure Verbindung in das Harzmolekül eingebaut wird, so daß hierdurch das Polymermolekül modifiziert wird. Es empfiehlt sich, den pH-Wert von etwa 5,5 nicht zu weit zu unterschreiten. So besteht beispielsweise bei einem pH-Wert von etwa 4,5 die Gefahr, daß die Reaktion zwischen 75 und 100°C so rasch abläuft, daß unlösliche feste Harze in unerwünschtem Umfange entstehen. Als basische Verbindung (III) wird vorzugsweise eine Verbindung in Form von Alkalihydroxid, einem Erdalkalioxid, einem Erdalkalihydroxid, einem Amin, einem Polyamin, einem Monoethanolamin, Diethanolamin, Triethanolamin und/oder einer basischen Metallverbindung eingesetzt.

Das Herstellungsverfahren des erfindungsgemäß eingesetzten modifizierten Melamin-Formaldehyd-Vorkondensats wird vorzugsweise im Hinblick auf Ausgangsmaterialien und Verfahrensparameter so gesteuert, daß die Substituentengruppen in der Melamin-Grundstruktur die Gruppen-NH(CH₂)₆COOH und/oder -NHSO₃H aufweisen. Unter den Aminocarbonsäuren werden die Aminoessigsäure (Glycin) und die Aminopropionsäure (Alanin) unter den Hydroxycarbonsäuren die Glykolsäure und die Milchsäure, unter den Polyhydroxycarbonsäuren die Gluconsäure und unter den Aminodicarbonsäuren die Asparagin- und die Glutaminsäuren bevorzugt.

Die nach dem beschriebenen Herstellungsverfahren gewonnenen Lösungen von erfindungsgemäß zur Dispersionsstabilisierung eingesetzten Melamin-Formaldehyd-Harzen B) können sowohl verdünnt als auch verdickt werden; insbesondere können sie sprühgetrocknet und in einem späteren Zeitpunkt wieder aufgelöst werden. Das Verfahren wird regelmäßig bei Umgebungsdruck durchgeführt. Es kann jedoch auch bei Überdruck und bei Unterdruck (Vakuum) durchgeführt werden.

Im Zusammenhang mit den verschiedenen Ausgestaltungen der Erfindung, unabhängig davon, ob eine Verbindung der oben beschriebenen Art A) und/oder B) eingesetzt wird, ist es überraschend, daß eine Qualitätsverbesserung der Kapsel erreicht wird. Diese äußert sich darin, daß Kapselwandungen dichter bzw. migrationsstabiler sind, so daß die unerwünschten Vorverfärbungen in dem Falle, daß Kapseln für Reaktionsdurchschreibepapiere hergestellt werden sollen, weitestgehend ausgeschlossen sind.

Unabhängig davon, ob die Verbindung A) und/oder B) eingesetzt wird, werden die gewünschten Effekte begünstigt, wenn in dem Reaktionsmedium Metallverbindungen, beispielsweise Phosphate, Chloride, Nitrate Sulfate, Acetate und dergleichen von zweiwertigen Metallen, wie Calcium, Magnesium, Zink oder auch von anders-wertigen Metallen, wie von Aluminium, Eisen, Nickel, Cobalt und/oder Mangan, Silizium, Zirkon und Titan, vorliegen. Auch können die Metalle in Form ihrer Carbonate, Oxide oder Hydroxide in das wässrige Medium eingebracht werden, wenn auf die Anwesenheit von anderen Anionen verzichtet werden soll. In besonderen Fällen kann das Einbringen von Metallen in Komplexform von Vorteil sein. Als grobe bevorzugte Richtlinie könnte hier angegeben werden, daß die angesprochenen Salze bzw. Verbindungen zur Erzielung der wünschenswerten Effekte in einer Menge von etwa 0,1 bis 12 Gew.-%, bezogen auf den wässrigen Anteil der jeweiligen Dispersion, vorliegen. Besonders bevorzugt wird der Bereich von etwa 0,5 bis 6 Gew.-%.

Der erfindungsgemäße Gedanke bleibt auch dadurch noch genutzt, indem weitere Substanzen, die in irgendeiner Weise im Verfahren Verbesserungen bewirken könnten, hinzugegeben werden. So könnte es in Einzelfällen von Vorteil sein, Polymere hinzuzugeben, um bestimmte Effekte zu erzielen, wie z. B. zur Sedimentationsverhinderung oder zur Viskositäts- und Rheologiesteuerung von Kapseldispersionen. Bei diesen Polymeren kann es sich insbesondere um Säure-, Amid-. Amino-, Imino-, Ester-, Ether-, Hydroxyl-, Urethan-, Thiol- oder Merkaptan-Gruppen tragende Polymere, insbesondere um Polyvinylalkohol, Gelatine, Maleinsäureanhydrid-Copolymere handeln. Dem Reaktionsmedium können auch verschiedene andere Additive beigefügt werden, so beispielsweise ein Ammoniumsalz, wie Ammoniumchlorid, das die Kondensationsreaktion in einigen Fällen beschleunigt.

Für das erfindungsgemäße Verfahren ist es entscheidend, daß zumindest dann, wenn die eigentliche Kapselbildung folgt, die dispersionsstabilisierenden Verbindungen, wie sie vorstehend beschrieben wurden, im reaktiven System anwesend sind. Es hat sich gezeigt, daß es von besonderem Vorteil ist, wenn man die ursprünglich basischen wässrigen Ausgangsmedien der Verbindungen A) und/oder B) ansäuert und dann in diese saure Phase das inerte hydrophobe Öl, das die jeweiligen Wirkstoffe, insbesondere in Form des Farbbildners von Farbreaktionssystemen dispergiert enthält, unter möglichst starkem Rühren einverleibt werden. Die Scherkräfte, die bei dem Rühren angewandt werden, müssen dafür sorgen, daß die wünschenswerte Feinemulgierung, die für die nachfolgenden Schritte erforderlich ist, eingestellt wird. Andererseits kann auch so verfahren werden, daß in ein ursprüngliches alkalisches wässriges Medium, in dem die Verbindungen A) und/oder B) enthalten sind, die jeweilige hydrophobe Phase mit dem gewünschten Wirkstoffanteil unter den erforderlichen Rührbedingungen eingemischt wird und anschließend unter weiterem Rühren durch Zugabe von ansäuernden Verbindungen der erforderliche pH-Wert auf unter 7 eingestellt wird. Unterhalb eines pH-Wertes von 7 hat diese Emulsion die erforderliche Stabilisierung und verliert sie auch nicht dadurch, daß die für die weitere Verfahrensführung erforderlichen Substanzen, insbesondere die zur Wandbildung nötigen Verbindungen, unter den dem Fachmann geläufigen Bedingungen hinzugegeben werden. Der Grundgedanke der vorliegenden Erfindung besteht demzufolge darin, daß spätestens dann, wenn die reaktive Emulsion, die alle für die Wandbildungsmechanismen erforderlichen Substanzen und auch die für die Stabilisierung erforderlichen Verbindungen enthält, vorliegt. Nach Zugabe der Wandbildungsmaterialien ist ein starkes Rühren auszuschließen, da dieses die Ausbildung der Kapselwandumhüllung negativ beeinflußt. Im Normalfall müssen daher zu dem Zeitpunkt des Beginns der Wandbildungsmechanismen alle für die Stabilisierung erforderlichen Maßnahmen, insbesondere der Zugabe der Verbindungen A) und/oder B), vollzogen sein.

Kern der Erfindung ist nicht die Art und Weise, wie die Aminoplastkapseln letztlich ausgebildet werden. Hierbei kann nach üblichen Techniken vorgegangen werden. So können die Aminoplaste beispielsweise bestehen aus Aldehydkondensaten auf der Basis von Melamin, Harnstoff, Thioharnstoff, N-Alkylharnstoff, Guanidin, Acetoguanamin, Benzoguanamin, Caprinoguanamin, Cyanamid, Dicyandiamid, und Alkyl/Arylsulfonamid. Bevorzugter Aldehyd ist Formaldehyd; es können aber auch höhere Aldehyde zum Einsatz kommen.

Dem Fachmann ist es geläufig, daß die Eigenschaften der Aminoplast-Kapselhülle einerseits durch die Ausgangssubstanz in Form des wasserlöslichen Aldehyd-Vorkondensates bzw. in Form der Gemische chemisch unterschiedlicher Vorkondensate und andererseits durch die Verfahrensführung bzw. Kondensationssteuerung in hohem Maße beeinflußt werden können. In der Fachliteratur wird auf die Steuerungsparameter der Aminoplastkondensation, wie auf den pH-Wert, den Säuretyp, die Temperatur und Konzentration der Reaktionsharze bzw. die weiteren Bestandteile des Reaktionsmediums, verwiesen.

Es hat sich gezeigt, daß zur Ausbildung der Aminoplast-Kapselhülle nicht-ionogene Melamin-Formaldehyd-Vorkondensate besonders gut geeignet sind. Hieran sind verschiedene Anforderungen zu stellen. Zunächst muß es wasserlöslich sein. Ferner sollte es eine herabgesetzte Eigenreaktionsfähigkeit aufweisen. Die Herabsetzung der Reaktivität läßt sich durch zumindest partielle Blockierung der aktiven Methylolgruppen erreichen. Hierzu geeignete Verfahren sind bekannt (vgl. "Kunststoffhandbuch", Bd. X, Duroplaste, S. 173). So kann die gewünschte Reaktivität des nicht-ionogenen oligomeren Melamin-Formaldehyd-Vorkondensats durch partielle Methylierung eingestellt werden. In der europäischen Patentschrift 00 26 914 wird ein solches Produkt beschrieben, das z.B. pro Mol Melamin 5,25 Mole Formaldehyd und 2,3 Mole Methylethergruppen enthält. Diesen Anforderungen genügen im wesentlichen die Handelsprodukte Madurit MW 112^{R} der Firma Cassella AG (vgl. hier "Kunstharze Hoechst, Technisches Merkblatt", Ausgabe September 1982), BC 336^{R} der BIP Chemicals Limited und Resin 42 - 91^{R} der Rousselot GmbH.

Durch die Herabsetzung der Reaktionsfähigkeit des nicht-ionogenen Melamin-Formaldehyd-Vorkondensats wird es gewährleistet, daß der Einkapselungsvorgang nicht zu schnell abläuft. Damit wird eine unerwünschte Agglomeratbildung bzw. das Ausflocken größerer Teilchen zurückgedrängt. Agglomerate bzw. größere Teilchen führen in Reaktionsdurchschreibepapieren z.B. zu einer undeutlichen Schrift. Nicht-ionogene methylierte Melamin-Formaldehyd-Vorkondensate des erwähnten Methylierungsgrades besitzen im allgemeinen die wünschenswerte Reaktivität und werden daher im Rahmen der Erfindung bevorzugt. Es lassen sich für die Zwecke der Erfindung auch Mischungen unterschiedlich reaktiver nicht-ionogener Melamin-Formaldehyd-Vorkondensate verwenden. In Einzelfällen kann es von Vorteil sein, die Reaktivität des zur Verfügung stehenden nicht-ionogenen Melamin-Formaldehyd-Vorkondensates zu steuern, was durch Zugabe von Formaldehyd geschehen kann.

Die Anwendungskonzentration der wässrigen Lösung der nicht-ionogenen Melamin-Formaldehyd-Vorkondensate kann in weitem Rahmen schwanken und liegt vorzugsweise bei der Konzentration von etwa 7 bis 20 Gew.-%, insbesondere bei etwa 12 Gew.-%.

Das hydrophobe Öl, in dem z.B. der Farbbildner eines Farbreaktionssystems oder dessen saurer Reaktionspartner, sofern es sich hier um eine lösliche Verbindung (z.B. eine phenolische Verbindung) handelt, gelöst ist, ist gegenüber Wasser inert, d.h. es ist in Wasser praktisch unlöslich bzw. damit nicht mischbar. Eine geringe Löslichkeit ist vernachlässigbar. Bevorzugte Beispiele von Ölen, die erfindungsgemäß als Lösungsmittel der Farbreaktionspartner herangezogen werden können, sind insbesondere teilweise hydrierte Terphenyle, Chlorparaffine, alkylierte Biphenyle, Alkylnaphthaline, halogenierte Olefine, Diarylmethanderivate, Dibenzylbenzolderivate, Alkane, Cycloalkane und Ester, wie Phthalate, Adipate, Trimellitate und Phosphate.

Zum Auflösen in den hydrophoben Ölen und zur Einkapselung kommen vielfältige Farbbildner, die in der Fachliteratur detailliert beschrieben werden, in Frage. Beispiele hierfür sind: Lakton-, Phthalid-, Fluoran-, Diphenylamin-, Spiropyran-, Auramin-, Phenothiazin-, Aminophenylpyridin- und Aminodiazaxanthenlakton-Derivate.Zwar stellt die Erfindung insbesondere auf ein Verfahren zur Mikroverkapselung von hydrophoben Ölen mit darin gelösten Farbreaktionspartnern von Farbreaktionssystemen ab. Es ist jedoch ohne weiteres ersichtlich, daß der Kern der Erfindung auch dann genutzt werden kann, wenn man dem hydrophoben Öl andere Mittel einverleibt oder andere Mittel allein verkapselt, so beispielsweise Duft- und Aromastoffe, Geschmacksstoffe, Vitamine, Düngemittel, Insektizide, Insektenlockstoffe, Fungizide, Pflanzenschutzmittel, Reinigungsmittel, Lösemittel, Schmierstoffe, Leuchtfarbstoffe, Flüssigkristalle, Klebstoffe, Explosionsstoffe und gasförmige Verbindungen für Ein- oder Mehrkomponentensysteme, Farbpigmentdispersionen und Magnetpigmentdispersionen in Öl- bzw. Wachsträgermaterialien.

Im einzelnen wird bei der Durchführung des erfindungsgemäßen Verfahrens unter Heranziehen des wasserlöslichen anionischen, sulfonierten Melamin-Formaldehyd-Vorkondensats A) oder der Verbindung B) zur alleinigen Dispersionsstabilisierung vorzugsweise wie folgt vorgegangen: eine etwa 1 bis 25, vorzugsweise etwa 4 bis 10 gew.-%ige wässrige alkalische Lösung (pH-Wert etwa 9 bis 10) des wasserlöslichen anionischen, sulfonierten Melamin-Formaldehyd-Vorkondensats oder der Verbindung B) wird unter Zugabe einer geeigneten Säure oder saurer Salze, insbesondere Ameisensäure, Phosphorsäure, Schwefelsäure, Essigsäure und dergleichen, auf einen pH-Wert von weniger als etwa 6,5 eingestellt, insbesondere zwischen etwa 3,5 bis 5,5. In diese Lösung wird unter starkem Rühren, insbesondere unter Einsatz eines Hochleistungsdispergiergerätes, beispielsweise beschrieben in der DE-PS 35 45 803, ein hydrophobes Öl mit gelöstem oder dispergiertem Wirkstoff eingerührt. Das Gewichtsverhältnis zwischen hydrophobem Öl und dem vorgegebenen sauer eingestellten Medium mit dem Gehalt an dem wasserlöslichen anionischen, sulfonierten Melamin-Formaldehyd-Vorkondensat bzw. Verbindung B) beträgt etwa 1:100 bis 30:20, vorzugsweise etwa 0.5:1 bis 3:1.

Der anzustrebende Öltröpfchendurchmesser in der Öl-in-Wasser-Dispersion sollte zwischen etwa 2 und 10 Mikrometern, bevorzugt zwischen 3 und 7 Mikrometern liegen. Dieser Durchmesser begünstigt ein gleichmäßiges Verhalten der mittels der gewonnenen Mikrokapseln hergestellten Systeme, insbesondere Farbreaktionssysteme, wie Farbreaktionsschreibpapiere. Werden Kapseln für andere als Farbreaktionspapieranwendungen hergestellt, kann der Kapseldurchmesser erheblich größer sein und an bis zu einigen hundert Mikrometern heranreichen. Das jeweils gewählte Verhältnis von Ölphase zu dem Feststoffanteil der wässrigen Phase ist nicht kritisch. Bei Farbeaktionspapier-kapseln liegt dieses Gewichtsverhältnis zwischen etwa 2:1 und 9:1, insbesondere zwischen etwa 4:1 und 5:1. Bei Kapseln für andere Anwendungsbereiche können die Gewichtsverhältnisse gemäß dem jeweiligen Anforderungsprofil von den genannten Zahlen erheblich abweichen.

Nach oder vor dem Zumischen der Ölphase wird die Mischung bzw. die Öl-in-Wasser-Dispersion im Hinblick auf die bei der späteren Bildung der Kapselhülle ablaufenden Kondensationsreaktion, die durch Säuren katalysiert wird, auf den erforderlichen sauren pH-Wert eingestellt. Hierzu können anorganische oder organische Säuren bzw. deren saure Salze herangezogen werden, sofern sie ausreichende Azidität aufweisen und zu keinen störenden Nebeneffekten Anlaß geben, insbesondere den in dem hydrophoben Öl gelösten Farbbildner von Farbreaktionssystemen nicht nachteilig beeinflussen. Essigsäure, Ameisensäure, Zitronensäure, Salzsäure oder auch Schwefelsäure werden hierzu bevorzugt verwendet. Der für die Kondensationsreaktion optimale pH-Wert liegt im allgemeinen im schwach sauren Bereich, insbesondere zwischen etwa 3 und 6. Bevorzugt wird der Bereich von etwa 3,5 bis 5. Zu hohe pH-Werte verlängern die Reaktionszeit, während zu niedrige pH-Werte zu vermeiden sind, da diese z.B. zu einer unerwünscht frühzeitigen Verfärbung des Farbbildners in der Mikrokapsel führen können.

In die in obiger Weise zubereitete Mischung wird beispielsweise die wässrige Lösung des nicht-ionogenen Melamin-Formaldehyd-Vorkondensates, das nachfolgend die Kapselhülle bildet, eingerührt. Hierfür sind übliche bekannte Rühreinrichtungen geeignet, die keine besonderen Rühr- bzw. Turbulenzwirkungen entfalten. Die erwähnten Hochleistungsdispergiergeräte dürfen hier nicht herangezogen werden, da sie die Ausbildung der Kapselhülle durch die Kondensationsreaktion des nicht-ionogenen Melamin-Formaldehyd-Vorkondensats gegegebenenfalls unter Einbeziehung einer wasserlöslichen makromolekularen Substanz stören würden.

Die oben detailliert besprochenen Ausgangsmaterialien liegen schließlich in Form einer reaktionsfähigen Öl-in-Wasser-Dispersion bzw. -Emulsion vor, in der unter normalem Rühren während etwa 1 bis 5 Stunden, insbesondere etwa 2 bis 3 Stunden die Bildung der Hülle der Mikrokapseln erfolgt. Diese Dispersion ist vollkommen stabil, was auf die Stabilisierung durch die Verbindungen A) und/oder B) erfolgt.

Da die erwähnten Kondensationsreaktionen, die zur Ausbildung der Mikrokapselwand führen, unter Wärmezufuhr beschleunigt ablaufen, kann es wünschenswert sein, die Temperatur der einzelnen Verfahrensstufen zu steuern bzw. einzuregeln, beispielsweise durch Erwärmen. Nach der Bildung des Reaktionsmediums wird dessen Temperatur im allgemeinen zunächst auf etwa 55°C gesteigert, um die Kondensationsreaktion und damit die Bildung der Wandung der Mikrokapseln zu optimieren. Dieser Vorgang ist häufig nach einer zweistündigen Reaktion bei etwa 55°C, bei den obengenannten bevorzugten Bereichen des pH-Wertes, annähernd abgeschlossen. Bei einer Temperatur von weniger als 55°C erhält man in Einzelfällen dennoch qualitativ zufriedenstellende Mikrokapseln, wobei allerdings, wie bereits ausgeführt, eine längere Reaktionsdauer erforderlich ist. Es läßt sich also auch bei Temperaturen arbeiten, die unter oder über etwa 55°C liegen. Im Rahmen einfacher Routineversuche kann die besonders günstige Reaktionstemperatur für den jeweiligen Einzelfall ohne weiteres ermittelt werden.

In Einzelfällen kann es zur Steuerung des erfindungsgemößen Verfahrens von Vorteil sein, zur Viskositätssenkung des wässrigen Reationssystems diesem weiteres wasserlösliches anionisches, sulfoniertes Melamin-Formaldehyd-Vorkondensat und/oder eine Verbindung B) hinzuzufügen.

Wenn die Kondensationsreaktion in dem gewünschten Ausmaß abgelaufen ist, wird der pH-Wert durch Zugabe von Alkalien, insbesondere von Natriumhydroxid, Kaliumhydroxid oder Ammoniumhydroxid, neutral oder schwach alkalisch eingestellt. Hierdurch wird eine weitere Reaktion weitgehend ausgeschlossen, die bei der Lagerung der Mikrokapseln zu einer Agglomeratbildung führen könnte. Auch wird der Korrosionseinfluß des sauren Mediums auf die metallischen Reaktionsgefäße behoben, Bei Verwendung von Ammoniumhydroxid wird vorhandener freier Formaldehyd als geruchlose Additionsverbindung aus dem Reaktionssystem weitgehend entfernt.

Das erfindungsgemäße Verfahren kann chargenweise, aber auch kontinuierlich geführt werden. Beim kontinuierlichen Vorgehen wird die zu Verfahrensbeginn erhaltene wässrige Lösung, die die stabilisierende Verbindung enthält, vorzugsweise nach ihrer Herstellung mittels eines Hochleistungsdispergiergerätes mit der den Wirkstoff enthaltenden Ölphase gemischt und danach in eine Rührkesselkaskade, in der die Kondensationsreaktion abäuft, geleitet, wobei in dem ersten Rührkessel die wässrige Lösung des nicht-ionogenen Melamin-Formaldehyd-Vorkondensates zudosiert werden kann. In der Praxis bietet es sich auch an, die Reaktionsmischung zunächst in einen größeren Einrührkessel einzuleiten. Sobald dieser Kessel gefüllt ist, wird das frische Reaktionsmedium in einen zweiten Rührkessel geleitet, während die Reaktion in dem ersten Rührkessel zum Abschluß gebracht wird. Die fertige Kapseldispersion wird entnommen. Anschließend kann wieder frisches Reaktionsmedium zugeleitet werden, während die Kapselbildungsreaktion in dem zweiten Rührkessel abläuft. Dieses kontinuierliche Verfahren soll nur als ein Beispiel angesehen werden, das vielfältige Modifikationen erfahren kann.

Nach Bildung der fertigen wässrigen Kapseldispersion wird diese üblichen Verfahren zur Entfernung des wässrigen Anteils unterzogen. Dies kann beispielsweise dadurch geschehen, indem die wässrige Kapseldispersion filtriert oder zentrifugiert oder der wässrige Anteil abgedampft oder sprühgetrocknet wird. Das Sprühtrocknen ist hier ein besonders geeignetes Verfahren. Es wird beispielsweise beschrieben in Römpps Chemie-Lexikon, 7. Aufl., Bd. 6, 1977, S. 3693/3694. Es fallen in jedem Fall die wünschenswerten Einzelkapseln an. Es gibt auch die Möglichkeit, die wässrige Dispersion zunächst in ein anderes wasserfreies Medium zu überführen und den wässrigen Anteil aus diesem zu entfernen, so daß die Einzelkapseln in dem neuen Medium dispergiert vorliegen. Als Beispiel eines solchen Vorgehens kann das Flushing-Verfahren angegeben werden, das beispielsweise in Römpps Chemie-Lexikon, 8. Aufl., Bd. 2, 1981, S. 1346/1347 beschrieben wird.

Die mit der Erfindung erzielbaren Vorteile sind wie folgt zu umschreiben: die Stabilisierung der Emulsion, die die Wandbildungsmaterialien noch nicht enthält, wie auch der Emulsion mit dem Gehalt an Wandbildungsmaterialien läßt sich anhand einer einzigen stabilisierenden Verbindung A) oder B) erreichen. Eine weitere Verbindung in Form einer wasserlöslichen kationischen Verbindung, insbesondere in Form eines wasserlöslichen kationisierbaren Melamin-Formaldehyd-Vorkondensats ist nicht erforderlich. Diese sollte allenfalls nur in unwesentlichen Mengen vorliegen. Damit wird eine unerwünscht hohe Formaldehyd-Belastung des Gesamtsystems vermieden. Schließlich ist auch der Einsatz eines wechselwirkenden Polymers (mit filmbildenden) Eigenschaften nicht erforderlich. Der zumindest weitgehende Ausschluß eines derartigen Polymers ermöglicht die Herstellung von Einzelkapseln, d.h. unter weitestgehendem Ausschluß von Agglomeraten. Derartige Einzelkapseln können in geeigneten Lösungsmitteln bzw. flüssigen Systemen gelöst bzw. dispergiert werden und sind dann insbesondere zur Herstellung qualitativ hochwertiger Farbreaktionsaufzeichnungspapiere geeignet. Diese lassen sich segmentartig drucken. Sind die Einzelkapseln in weitgehend wasserfreien Druckfarben enthalten, dann eignen sich diese insbesondere zum Einsatz in den Bereichen Flexodruck, Siebdruck, Naß- und Trockenoffsetdruck sowie Tiefdruck.

Die Erfindung soll nachfolgend anhand verschiedener Beispiele noch näher erläutert werden:

### Beispiel 1

10 Gew.-Teile einer 40%igen wässrigen Lösung eines sulfonierten Melamin-Formaldehyd-Vorkondensates werden bei ca. 22°C mit 60 Gew.-teilen Wasser verdünnt. Unter Rühren mit einem normalen Flügelrührer gibt man 1 ml einer 20%igen Ameisensäure hinzu. Der pH-Wert fällt auf 3,7 bis 4,0. Zu dieser Lösung von ca. 22°C gibt man unter Rühren mit einem Hochleistungsdispergiergerät 54 g einer 45°C warmen öligen Phase, die durch Auflösen von 1,1 Gew.-% 1 ,3-Dimethyl-6-diethylaminofluoran, 0,4 Gew.-% Kristallviolettaceton, 0,2 Gew-% 3,3-Bis(1'-n-oktyl-2'-methyl-indol-3'-yl)-phthalid, 2,4 Gew.-% 2-Oktylamino-6-diethylamino-fluoran, 0,3 Gew.-% 9-N-Butyl-carbazolyl-(3)-4,4''-bis(N-methyl-,N-phenylamino)-diphenylmethan und 0,6 Gew.-% 10-Benzoyl-3,7-bis-(dimethylamino)-phenothiazin in Diisopropylnaphthalin erhalten wurde. Die resultierende stabile Emulsion versetzt man unter Weiterrühren mit einem normalen Flügelrührer mit einer Lösung aus 3 g Wasser und 1 g einer 85%igen Ameisensäure, wobei sich ein pH-Wert von ca. 3,1 einstellt. Die auf diese Weise sauer eingestellte, stabile Emulsion wird unter ständigem Rühren mit einer Wandbildnerlösung aus 12 g Resin 42 - 91 (60%iger Lösung eines methylierten Melamin-Formaldehyd-Vorkondensates in Wasser) und 5 g Wasser versetzt und anschließend ebenfalls unter Rühren auf 55°C erwärmt und während 4 Stunden bei dieser Temperatur gerührt. Nach dem Abkühlen auf Raumtemperatur und Einstellen des pH-Wertes auf pH 8,8 mit 25%igem Ammoniakwasser resultiert eine Kapseldispersion, deren Kapseln einen Durchmesser von ca. 3-8 Mikrometern aufweisen und deren Trockengehalt von ca. 38 Gew.-% beträgt.

### Beispiel 2

Zu einer Lösung von Raumtemperatur, hergestellt durch Vermischen von 211,5 g Wasser und 88,8 g einer 20%igen wässrigen Lösung eines sulfonierten Melamin-Formaldehyd-Vorkondensates wurden unter gelindem Rühren mit einem Flügelrührer 6 g Calciumchlorid gegeben. Der pH-Wert wird mit 4 ml einer 20%igen Ameisensäure auf ca. 3,8 eingestellt. Zu dieser Lösung wurden unter Rühren mit einem Hochleistungsdispergiergerät 417,3 g einer ca. 42°C warmen Ölphase gegeben, die aus 156,5 g Chlorparaffin und 252 g Kerosin sowie insgesamt 8,8 g Farbbildner bestand. Als Farbbildner wurde ein Gemisch aus 75% Kristallviolettlakton und 25% 9-N-Butyl-carbazolyl-(3)-,4''-bis-(N-methyl-,N-phenylamino)-diphenylmethan verwendet. Die sich bildende Emulsion wies einen Tröpfchendurchmesser von ca. 3 bis 10 Mikrometern auf, der sich bei den weiteren Verfahrensschritten nicht signifikant änderte.

Durch Hinzufügen von 10 g einer 20%igen wässrigen Ameisensäure unter gelindem Rühren wurde das System auf einen sauren pH-Wert von ca. 3,1 eingestellt. Anschließend wurden 131 g einer Melamin-Formaldehyd-Vorkondensat-Harzlösung, gebildet aus 50 g Urecoll SMV und 51 g Wasser, hinzugegeben. Der pH stieg auf 3,8.

Nach Erwärmen der Emulsion auf 58°C und Halten der Temperatur während 3,5 Stunden unter leichtem Rühren hatte sich eine Kapseldispersion gebildet, die nach dem Abkühlen und Neutralisieren mittels 25%igem Ammoniakwasser bis auf den pH-Wert 8 Kapseln mit einem Durchmesser von ca. 3 bis 10 Mikrometern enthielt und gleiche Eigenschaften, wie unter Beispiel 1 beschrieben, hatte (keine Haftung auf Untergründen verschiedener Art, keine Beschränkung in der Bindemittelwahl, einzelne Kapseln beim Sprühtrocknen oder Eintrocknenlassen der Dispersion, stabile Kapseln, gut geeignet zur Herstellung Farbreaktionspapierbeschichtungsmassen). Der Trockensusbtanzgehalt der Dispersion lag bei ca 47 Gew.-%.

### Beispiel 3

84 g einer 20%igen Lösung eines modifizierten, Carboxylgruppen enthaltenden Melamin-Formaldehyd-Vorkondensates wurden mit 250 g Wasser verdünnt. Unter Rühren wurden 8g Alaun zugegeben. Der pH stellte sich auf ca. 3,7 ein. Unter Verwendung eines Hochleistungsdispergiergerätes wurden bei Raumtemperatur 197 g einer Ölphase einemulgiert, wie sie im Beispiel 2 beschrieben wurde. Die Emulsion wies einen Tröpfchendurchmesser von ca. 3 bis 12 Mikrometern auf und blieb während der weiteren Verfahrensschritte stabil.

Durch Zugabe von 10 g 20%iger Ameisensäure unter Rühren mit einem Flügelrührer zu der Emulsion und durch weiteres Hinzufügen einer Lösung aus 50 g Wasser und 55 g einer 70%igen Lösung eines methylolierten Melamin-Formaldehyd-Vorkondensates und anschließendes Aufheizen auf 55°C und Halten dieser Temperatur während 4 Stunden hatte sich eine Kapseldispersion gebildet. Durch Abkühlen und Zugabe von 25%iger Ammoniaklösung wurde auf einen pH-Wert von 7,5 eingestellt. Anschließend wurden 7g Ethylenharnstoff hinzugefügt. Nach 1 Stunde Rührzeit war der pH-Wert auf unter 7 abgefallen. Er wurde erneut mit Ammoniakwasser auf pH 7 eingestellt.

Die Kapseldispersion ließ sich zu einem sehr lockeren, extrem feinpulvrigen Material sprühtrocknen.

### Beispiel 4

### Herstellung des modifizierten Melamin-Formaldehyd-Vorkondensats:

Eine Lösung, bestehend aus 130 Gew.-Teilen (1,6 Mol) 37%igem Formalin, 120 Gew.-Teilen Wasser und 43,4 Gew.-Teilen 50%iger Natronlauge, wurde nacheinander mit 44,6 Gew.-Teilen (0,48 Mol) Sulfaminsäure und 56 Gew.-Teilen (0,44 Mol) Melamin versetzt. Danach wurde auf 80°C erwärmt und dann 60 min lang bei dieser Temperatur gerührt. Anschließend wurde das entstandene Vorkondensat zuerst mit 2,6 Gew.-Teilen 50%iger Natronlauge und dann mit 19 Gew.-Teilen (0,1 Mol) Sulfanilsäure versetzt, wobei der pH-Wert auf 5,9 abfiel. Die Reaktionsmischung wurde 1 h lang auf 80°C erhalten. Anschließend wurde mit Natronlauge auf einen pH-Wert von 10,1 eingestellt und auf Raumtemperatur abgekühlt. Es entstand eine klare, farblose Polymerlösung mit einem Trockengehalt von 41% und einer Viskosität von 37 mPa.s.

### Herstellung von Mikrokapseln:

50 g der nach vorstehendem Herstellungsbeispiel erhaltenen 41 %igen wässrigen Lösung des modifizierten anionischen Melamin-Formaldehyd-Vorkondensates wurden bei etwa 22°C mit 300 g Wasser verdünnt und mit 20 %iger Sulfaminsäure auf pH-Wert von ca. 4 eingestellt. Hierzu wurden unter Rühren mit einem Hochleistungsdispergiergerät 272 g einer 45°C warmen öligen Phase gegeben, die durch Auflösen von 1,1 Gew.-% 1,3-Dimethyl-6-diethylaminofluoran, 0,4 Gew.-% Kristallviolettlakton, 0,2 Gew.-% 3,3-Bis-(1'-n-oktyl-2'-methyl-indol-3'-yl)-phthalid, 2,4 Gew.-% 2-Oktylamino-6-diethylamino-fluoran, 0,3 Gew.-% 9-N-Butyl-carbazolyl-(3)-4',4''-bis-(N-methyl-,N-phenylamino)-diphenylmethan und 0,6 Gew.-% 10-Benzoyl-3,7-bis-(dimethylamino)-phenothiazin in Diisopropylnaphthalin erhalten wurde. Die resultierende stabile Emulsion wurde unter Weiterrühren mit einem normalen Flügelrührer mit einer Lösung aus 10 g Wasser und 0,3 g einer 85%igen Ameisensäure versetzt, wobei sich ein pH-Wert von etwa 3,2 einstellte. Die auf diese Weise sauer eingestellte stabile Emulsion wurde unter ständigem Rühren mit einer Wandbildnerlösung aus 70 g einer 60%igen Lösung eines methylierten Melamin-Formaldehyd-Vorkondensats in Wasser (vertrieben unter der Handelsbezeichnung Resin 42-91 von der Firma Ceca SA, Paris) und 60 g Wasser versetzt und anschließend ebenfalls unter Rühren auf 55°C erwärmt und 4 h lang bei dieser Temperatur gerührt. Nach dem Abkühlen auf Raumtemperatur und Einstellen des pH-Wertes auf 8,8 mit 25%igem Ammoniakwasser fiel eine Kapseldispersion an, deren Kapseln einen Durchmesser von etwa 3 bis 8 Mikrometern hatten und die einen Trockengehalt von etwa 38 Gew.-% aufwies.

Die Kapseln liegen als Einzelkapseln mit den damit verbundenen Vorteilen vor, so beispielsweise vorteilhafte Redispergierung von Einzelkapseln in geeigneten Dispersionsmitteln.

### Beispiel 5

Zu einer Lösung von Raumtemperatur, hergestellt durch Vermischen von 211,5 g Wasser und 40 g einer 41%igen wässrigen Lösung eines modifizierten anionischen Melamin-Formaldehyd-Vorkondensats (hergestellt gemäß Herstellungsbeispiel 1) wurden unter Rühren 4 g Eisen-II-sulfat hinzugefügt und der pH-Wert mit 20 %iger H₂SO₄ auf ca. 3,6 eingestellt. Mit einem Hochleistungsdispergiergerät wurden hierzu 417,3 g einer etwa 42°C warmen Ölphase gegeben, die aus 156,5 g Chlorparaffin und 252 g Kerosin sowie insgesamt 8,8 g Farbbildner bestand. Als Farbbildner wurde ein Gemisch aus 75% Kristallviolettlakton und 25% 9-N-Butyl-carbazolyl-(3)-4',4''-bis-(N-methyl-,N-phenylamino)-diphenylmethan verwendet. Die sich bildende Emulsion wies einen Tröpfchendurchmesser von etwa 3 bis 10 Mikrometern auf, der sich bei den weiteren Verfahrensschritten nicht signifikant änderte.

Durch Hinzufügen von 10 ml einer 20%igen wässrigen Ameisensäure unter gelindem Rühren wurde das System auf einen pH-Wert von etwa 3,0 eingestellt. Anschließend wurden 131 g einer wässrigen Lösung eines nicht-ionischen Melamin-Formaldehyd-Vorkondensates, gebildet aus 80 g des Handelsproduktes BC 336 (vertrieben von der Firma Bip, Großbritannien) und 51 g Wasser, hinzugegeben.

Nach Erwärmen der Emulsion auf 58°C und Halten der Temperatur während 3,5 h unter leichtem Rühren bildete sich eine Kapseldispersion, die nach dem Abkühlen und Neutralisieren mit 25%igem Ammoniakwasser bis auf den pH-Wert von 8 Kapseln eines Durchmessers von etwa 3 bis 10 Mikrometern entstehen ließ. Diese wies gleiche Eigenschaften wie die des Beispiels 1 auf. Der Trockensubstanzgehalt der Dispersion lag bei etwa 47 Gew.-%.

### Vergleichsbeispiel 1

Das Beispiel 1 wurde wiederholt, jedoch ohne Säurezugabe zum sulfonierten Melamin-Formaldehyd-Vorkondensat. Unmittelbar nach Beendigung des Rührens mit einem Hochleistungsdispergiergerät brach die Emulsion zusammen. Das Öl sammelte sich zum Teil in Pfützen auf der Flüssigkeitsoberfläche. Es war nicht möglich, Kapseln herzustellen.

## Patentansprüche

1. Verfahren zur Herstellung von Mikrokapseln durch Mikroverkapselung von hydrophoben Ölen mit darin gelösten oder dispergierten Substanzen, insbesondere von Farbreaktionspartnern von Farbreaktionssystemen, wobei ein die Substanz gelöst oder dispergiert enthaltendes hydrophobes Öl unter starkem Rühren mit einem wässrigen Medium vermischt wird, in der erhaltenen Öl-in-Wasser-Dispersion unter sauren Bedingungen Aminoplastkapseln gebildet und diese gegebenenfalls anschließend isoliert werden, wobei in der sauer eingestellten Öl-in-Wasser-Dispersion mindestens eine dispersionsstabilisierende Verbindung, die kein Reaktivtensid darstellt, enthalten ist, dadurch **gekennzeichnet,** daß die saure Öl-in-Wasser-Dispersion A) ein wasserlösliches anionisches, sulfoniertes Melamin-Formaldehyd-Vorkondensat und/oder B) ein solches wasserlösliches anionisches modifiziertes Melamin-Formaldehyd-Vorkondensat enthält, das dadurch erhalten worden ist, indem man
a) in einer ersten Stufe Melamin und Formaldehyd bei einer Temperatur zwischen 75 und 100°C in alkalischem Medium und in Gegenwart von Wasser mit wenigstens einer Verbindung (I) in Form eines Alkalisulfits, Erdalkalisulfits, eines Alkalisulfamats, eines Erdalkalisulfamats, einer Aminosulfonsäure, einer Aminocarbonsäure und einer Aminodicarbonsäure zu einem Vorkondensat umsetzt,
b) anschließend in einer zweiten Stufe dieses Vorkondensat bei einem pH-Wert von etwa 5,5 bis 7,0 einer Polykondensation unterwirft, indem man mit wenigstens einer sauren Verbindung (II) in Form von Sulfaminsäure, einer Aminocarbonsäure, einer Aminodicarbonsäure, einer Hydroxycarbonsäure, einer Polyhydroxycarbonsäure und einer Aminosulfonsäure ansäuert, und
c) nach beendigter Polykondensation die erhaltene Harzlösung gegebenenfalls durch Zugabe wenigstens einer basischen Verbindung (III) alkalisch stellt und
d) diese gegebenenfalls alkalische Harzlösung zur Dispersionsstabilisierung in das Verfahren einbezieht, wobei die Verbindungen A) und B) allein dispersionsstabilisierend sind und zur Dispersionsstabilisierung keine wasserlösliche kationische Verbindung herangezogen wird.

2. Verfahren nach Anspruch 1, dadurch gekennzeichnet, daß das wasserlösliche anionische, sulfonierte Melamin-Formaldehyd-Vorkondensat pro Melamin-Ring im Mittel etwa 0,7 bis 1,3 Sulfonatgruppen aufweist.

3. Verfahren nach Anspruch 1 oder 2, dadurch gekennzeichnet, daß das wasserlösliche anionische, sulfonierte Melamin-Formaldehyd-Vorkondensat pro Melamin-Ring im Mittel etwa 2 bis 4 Methylolgruppen aufweist.

4. Verfahren nach mindestens einem der Ansprüche 1 bis 3, dadurch gekennzeichnet, daß das Molekulargewicht des wasserlöslichen anionischen, sulfonierten Melamin-Formaldehyd-Vorkondensats etwa 3 000 bis 300 000 beträgt.

5. Verfahren nach Anspruch 4, dadurch gekennzeichnet, daß das Molekulargewicht des wasserlöslichen anionischen, sulfonierten Melamin-Formaldehyd-Vorkondensats zwischen etwa 5 000 und 100 000 liegt.

6. Verfahren nach mindestens einem der Ansprüche 1 bis 5, dadurch gekennzeichnet, daß das wasserlösliche anionische, sulfonierte Melamin-Formaldehyd-Vorkondensat in dem wässrigen Medium in einer Menge von etwa 0,3 bis 25 Gew.-% enthalten ist.

7. Verfahren nach Anspruch 1, dadurch gekennzeichnet, daß man bei der Herstellung des wasserlöslichen anionischen modifizierten Melamin-Formaldehyd-Vorkondensats in der ersten Stufe das Melamin, den Formaldehyd und die Verbindung (I) in einem molaren Verhältnis von etwa (1:3,5) bis (6:0,5) bis 1 einsetzt.

8. Verfahren nach Anspruch 1 oder 7, dadurch gekennzeichnet, daß man in der ersten Stufe bei einem pH-Wert von etwa 9,0 bis 13,0 arbeitet.

9. Verfahren nach mindestens einem der Ansprüche 1,7 und 8, dadurch gekennzeichnet, daß man in der zweiten Stufe das Vorkondensat aus der ersten Stufe und die Verbindungen aus der Gruppe II in einem molaren Verhältnis, bezogen auf das in der ersten Stufe verwendete Melamin, von 1:0,1 bis 3 einsetzt.

10. Verfahren nach mindestens einem der Ansprüche 1 und 7 bis 9, dadurch gekennzeichnet, daß man in der zweiten Kondensationsstufe als Verbindung der Gruppe (II) ein Gemisch aus Sulfaminsäure und Glutaminsäure verwendet, insbesondere ein Gemisch aus gleichen Teilen Sulfaminsäure und Glutaminsäure.

11. Verfahren nach mindestens einem der Ansprüche 1 und 7 bis 10, dadurch gekennzeichnet, daß man in der zweiten Stufe bei einer Temperatur von etwa 75 bis 100°C arbeitet.

12. Verfahren nach mindestens einem der Ansprüche 1 und 7 bis 11, dadurch gekennzeichnet, daß man als basische Verbindung (III) eine Verbindung in Form von Alkalihydroxid, einem Erdalkalioxid, einem Erdalkalihydroxid, einem Amin, einem Polyamin, Monoethanolamin, Diethanolamin, Triethanolamin und/oder einer basischen Metallverbindung einsetzt.

13. Verfahren nach mindestens einem der vorhergehenden Ansprüche, dadurch gekennzeichnet, daß in der Öl-in-Wasser-Dispersion zusätzlich Metallverbindungen in Form von Salzen von zwei- oder mehrwertigen Metallen enthalten sind.

14. Verfahren nach Anspruch 13, dadurch gekennzeichnet, daß die Metalle Calcium, Magnesium, Aluminium, Eisen, Zink, Nickel, Cobalt, Mangan, Titan, Zirkon und/oder Silizium darstellen.

15. Verfahren nach mindestens einem der Ansprüche 1 bis 14, dadurch gekennzeichnet, daß zur Ausbildung der Aminoplastkapseln ein wasserlösliches nicht-ionogenes Melamin-Formaldehyd-Vorkondensat verwendet wird.

16. Verfahren nach Anspruch 13, dadurch gekennzeichnet, daß als wasserlösliches nicht-ionogenes Melamin-Formaldehyd-Vorkondensat ein partiell mit Methanol verethertes Melamin-Formaldehyd-Vorkondensat verwendet wird.

17. Verfahren nach mindestens einem der vorhergehenden Ansprüche 1 bis 14, dadurch gekennzeichnet, daß zur Ausbildung der Aminoplastkapseln Harnstoff-Formaldehyd-Vorkondensate verwendet werden.

18. Verfahren nach mindestens einem der vorhergehenden Ansprüche 1 bis 14, dadurch gekennzeichnet, daß zur Ausbildung der Aminoplastkapseln Mischungen von Melamin-Formaldehyd-Vorkondensaten und Harnstoff-Formaldehyd-Vorkondensaten verwendet werden.

19. Verfahren nach mindestens einem der vorhergehenden Ansprüche, dadurch gekennzeichnet, daß zur Ausbildung der Aminoplastkapseln neben Melamin-Formaldehyd-Vorkondensaten und/oder Harnstoff-Formaldehyd-Vorkondensaten andere Aminoplastbildner, wie Aldehyd-Vorkondensate auf der Basis von Thioharnstoff, N-Alkylharnstoff, Guanidin, Acetoguanamin, Benzoguanamin, Caprinoguanamin, Cyanamid, Dicyandiamid und Alkyl-/Arylsulfonamid verwendet werden.

20. Verfahren nach mindestens einem der Ansprüche 1 bis 19, dadurch gekennzeichnet, daß zur Viskositätssenkung des wässrigen Reaktionssystems diesem weiteres wasserlösliches anionisches, sulfoniertes Melamin-Formaldehyd-Vorkondensat oder eine Verbindung B) zugefügt wird.

21. Verfahren nach mindestens einem der vorhergehenden Ansprüche, dadurch gekennzeichnet, daß in dem einzukapselnden hydrophoben Öl der Farbreaktionspartner eines Farbreaktionssystems gelöst oder dispergiert ist.

## Claims

1. A method for the production of microcapsules through the microencapsulation of hydrophobic oils with substances dissolved or dispersed therein, especially colour reaction partners of colour reaction systems, whereby a hydrophobic oil containing the substance in dissolved or dispersed form is mixed with vigorous stirring with an aqueous medium, with the formation of aminoplast capsules in the resultant oil-in-water dispersion under acid conditions, the said aminoplast capsules subsequently isolated where desired, wherein at least one dispersion-stabilising compound which is not a reactive tenside is contained in the acid-adjusted oil-in-water dispersion, characterised in that the acidic oil-in-water dispersion contains A) a water-soluble anionic, sulphonated melamine-formaldehyde precondensate and/or B) a water-soluble anionic modified melamine-formaldehyde precondensate, and has been derived by
a) reacting, in a first step, melamine and formaldehyde at a temperature between 75 and 100°C in an alkaline medium in the presence of water with at least one compound (I) in the form of an alkali sulphite, an alkaline earth sulphite, an alkali sulphamate, an alkaline earth sulphamate, an aminosulphonic acid, an aminocarboxylic acid or an aminodicarboxylic acid, to form a precondensate
b) subsequently, in a second step, subjecting this precondensate to a polycondensation reaction at a pH of approximately 5.5 to 7.0 by rendering it acidic through the addition of at least one acidic compound (II) in the form of sulphamic acid, an aminocarboxylic acid, an aminodicarboxylic acid, a hydroxycarboxylic acid, a polyhydroxycarboxylic acid or an aminosulphonic acid, and
c) once the polycondensation reaction is complete, rendering the resultant resin solution alkaline through the addition, if necessary, of at least one basic compound (III), and
d) incorporating this, if necessary alkaline, resin solution for stabilization of the dispersion into the method, whereby the compounds A) and B) alone act to stabilise the dispersion and no water-soluble cationic compound is used for stabilization of the dispersion.

2. A method according to claim 1, characterised in that the water-soluble, anionic, sulphonated melamine-formaldehyde precondensate has on average approximately 0.7 to 1.3 sulphonate groups per melamine ring.

3. A method according to either claim 1 or 2, characterised in that the water-soluble, anionic, sulphonated melamine-formaldehyde precondensate has on average approximately 2 to 4 methylol groups per melamine ring.

4. A method according to at least one of claims 1 to 3, characterised in that the molecular weight of the water-soluble, anionic, sulphonated melamine-formaldehyde precondensate is in the range from approximately 3000 to 300,000.

5. A method according to claim 4, characterised in that the molecular weight of the water-soluble, anionic, sulphonated melamine-formaldehyde precondensate lies between approximately 5000 to 100,000.

6. A method according to at least one of claims 1 to 5, characterised in that the water-soluble, anionic, sulphonated melamine-formaldehyde precondensate is contained in the aqueous medium at a concentration of approximately 0.3 to 25 per cent by weight.

7. A method according to claim 1, characterised in that to yield the water-soluble, anionic, modified melamine-formaldehyde precondensate, the melamine, the formaldehyde and the compound (I) are present in the first step in a molar ratio of approximately (1:3.5) to (6:0.5) to 1.

8. A method according to either claim 1 or 7, characterised in that the first step is performed at a pH of approximately 9.0 to 13.0.

9. A method according to at least one of claims 1, 7 and 8, characterised in that in the second step, the precondensate from the first step and the compounds from group II are present in a molar ratio of 1:0.1 to 3 with respect to the melamine used in the first step.

10. A method according to at least one of claims 1 and 7 to 9, characterised in that in the second condensation step, a mixture of sulphamic acid and glutamic acid, especially a mixture of equal parts of sulphamic acid and glutamic acid, is used as the group (II) compound.

11. A method according to at least one of claims 1 and 7 to 10, characterised in that the second step is carried out at a temperature of approximately 75 to 100°C.

12. A method according to at least one of claims 1 and 7 to 11, characterised in that the basic compound (III) is in the form of an alkali hydroxide, an alkaline earth oxide, an alkaline earth hydroxide, an amine, a polyamine, monoethanolamine, diethanolamine, triethanolamine and/or a basic metal compound.

13. A method according to at least one of the foregoing claims, characterised in that additional metal compounds in the form of salts of bivalent or multivalent metals are contained in the oil-in-water dispersion.

14. A method according to claim 13, characterised in that the metals are calcium, magnesium, aluminium, iron, zinc, nickel, cobalt, manganese, titanium, zircon and/or silicon.

15. A method according to at least one of claims 1 to 14, characterised in that a water-soluble, non-ionogenic melamine-formaldehyde precondensate is used to form the aminoplast capsules.

16. A method according to claim 13, characterised in that a melamine-formaldehyde precondensate, partially etherified with methanol, is used as the water-soluble, non-ionogenic melamine-formaldehyde precondensate.

17. A method according to at least one of claims 1 to 14, characterised in that urea-formaldehyde precondensates are used to form the aminoplast capsules.

18. A method according to at least one of claims 1 to 14, characterised in that mixtures of melamine-formaldehyde precondensates and urea-formaldehyde precondensates are used to form the aminoplast capsules.

19. A method according to at least one of the foregoing claims, characterised in that other aminoplast-forming compounds, such as aldehyde-precondensates based on thiourea, N-alkylurea, guanidine, acetoguanamine, benzoguanamine, caprinoguanamine, cyanamide, dicyandiamide and alkyl/arylsulphonamide, are used to form the aminoplast capsules in addition to melamine-formaldehyde precondensates and urea-formaldehyde precondensates.

20. A method according to at least one of claims 1 to 19, characterised in that a further water-soluble, anionic sulphonated melamine-formaldehyde precondensate or a compound B) is added to the aqueous reaction system to reduce its viscosity.

21. A method according to at least one of the foregoing claims, characterised in that the colour reaction partner of a colour reaction system is dissolved or dispersed in the hydrophobic oil to be encapsulated.

## Revendications

1. Procédé de production de micro-capsules par micro-encapsulation d'huiles hydrophobes dans lesquelles sont dissoutes ou dispersées des substances, notamment de partenaires de systèmes donnant une réaction colorée, dans lequel une huile hydrophobe contenant la substance dissoute ou dispersée est mélangée sous agitation énergique avec un milieu aqueux, des capsules d'aminoplaste sont formées dans des conditions acides dans la dispersion huile-dans-eau obtenue et ces capsules sont ensuite isolées le cas échéant, la dispersion huile-dans-eau ajustée du côté acide contenant au moins un composé stabilisant qui ne constitue pas un surfactant réactif, caractérisé en ce que la dispersion huile-dans-eau acide contient A) un précondensat mélamine-formaldéhyde sulfoné anionique hydrosoluble et/ou B) un précondensat mélamine-formaldéhyde modifié anionique hydrosoluble qui a été obtenu de façon telle que
a) dans une première étape, on combine en un précondensat de la mélamine et du formaldéhyde à une température comprise entre 75 et 100°C en milieu alcalin et en présence d'eau avec au moins un composé (I) sous forme d'un sulfite alcalin, d'un sulfite alcalino-terreux, d'un sulfamate alcalin, d'un sulfamate alcalino-terreux, d'un acide amino-sulfonique, d'un acide amino-carboxylique et d'un acide amino-dicarboxylique,
b) ensuite, on soumet ce précondensat dans une deuxième étape, à un pH d'environ 5,5 à 7,0, à une polycondensation par acidification avec au moins un composé acide (I) sous forme d'acide sulfamique, d'un acide amino-carboxylique, d'un acide amino-dicarboxylique, d'un acide hydroxycarboxylique, d'un acide polyhydroxycarboxylique et d'un acide amino-sulfonique et
c) lorsque la polycondensation est terminée, on alcalinise éventuellement la solution de résine obtenue par addition d'au moins un composé basique (III), et
d) on incorpore cette solution de résine éventuellement alcaline au procédé en vue de stabiliser la dispersion, les composés A) et B) étant les seuls stabilisants de la dispersion et aucun composé cationique hydrosoluble n'étant utilisé pour stabiliser la dispersion.

2. Procédé suivant la revendication 1, caractérisé en ce que le précondensat mélamine-formaldéhyde sulfoné anionique hydrosoluble présente, par noyau de mélamine, en moyenne environ 0,7 à 1,3 groupes sulfonate.

3. Procédé suivant la revendication 1 ou 2, caractérisé en ce que le précondensat mélamine-formaldéhyde sulfoné anionique hydrosoluble présente, par noyau de mélamine, en moyenne environ 2 à 4 groupes méthylol.

4. Procédé suivant l'une au moins des revendications 1 à 3, caractérisé en ce que le poids moléculaire du précondensat mélamine-formaldéhyde sulfoné anionique hydrosoluble s'élève à une valeur d'environ 3000 à 300 000.

5. Procédé suivant la revendication 4, caractérisé en ce que le poids moléculaire du précondensat mélamine-formaldéhyde sulfoné anionique hydrosoluble se situe entre environ 5000 et 100 000.

6. Procédé suivant l'une au moins des revendications 1 à 5, caractérisé en ce que le précondensat mélamine-formaldéhyde sulfoné anionique hydrosoluble est contenu dans le milieu aqueux en une quantité d'environ 0,3 à 25 % en poids.

7. Procédé suivant la revendication 1, caractérisé en ce qu'on utilise dans la première étape de préparation du précondensat mélamine-formaldéhyde modifié anionique hydrosoluble, la mélamine, le formaldéhyde et le composé (I) dans des proportions molaires d'environ (1:3,5) à (6:0,5) à 1.

8. Procédé suivant la revendication 1 ou 7, caractérisé en ce qu'on opère dans la première étape à une valeur de pH d'environ 9,0 à 13,0.

9. Procédé suivant l'une au moins des revendications 1, 7 et 8, caractérisé en ce qu'on utilise dans la seconde étape le précondensat venant de la première étape et les composés du groupe II dans un rapport molaire, relativement à la mélamine utilisée dans la première étape, de 1:0,1 à 3.

10. Procédé suivant l'une au moins des revendications 1 et 7 à 9, caractérisé en ce qu'on utilise dans la seconde étape de condensation, comme composé du groupe (II), un mélange d'acide sulfamique et d'acide glutamique, en particulier un mélange de parties égales d'acide sulfamique et d'acide glutamique.

11. Procédé suivant l'une au moins des revendications 1 et 7 à 10, caractérisé en ce qu'on opère dans la seconde étape à une température d'environ 75 à 100°C.

12. Procédé suivant l'une au moins des revendications 1 et 7 à 11, caractérisé en ce qu'on utilise comme composé basique (III) un composé sous forme d'hydroxyde alcalin, d'un oxyde alcalino-terreux, d'un hydroxyde alcalino-terreux, d'une amine, d'une polyamine, de monoéthanolamine, de diéthanolamine, de triéthanolamine et/ou d'un composé métallique basique.

13. Procédé suivant l'une au moins des revendications précédentes, caractérisé en ce que des composés métalliques sous forme de sels de métaux de valence égale ou supérieure à 2 sont contenus dans la dispersion huile-dans-eau.

14. Procédé suivant la revendication 13, caractérisé en ce que les métaux sont le calcium, le magnésium, l'aluminium, le fer, le zinc, le nickel, le cobalt, le manganèse, le titane, le zirconium et/ou le silicium.

15. Procédé suivant l'une au moins des revendications 1 à 14, caractérisé en ce qu'on utilise un précondensat mélamine-formaldéhyde non ionogène hydrosoluble pour la formation des capsules d'aminoplastes.

16. Procédé suivant la revendication 13, caractérisé en ce qu'on utilise un précondensat mélamine-formaldéhyde partiellement éthéré avec du méthanol comme précondensat mélamine-formaldéhyde non ionogène hydrosoluble.

17. Procédé suivant l'une au moins des revendications 1 à 14 précédentes, caractérisé en ce qu'on utilise des précondensats urée-formaldéhyde pour la formation des capsules d'aminoplastes.

18. Procédé suivant l'une au moins des revendications 1 à 14 précédentes, caractérisé en ce qu'on utilise des mélanges de précondensats mélamine-formaldéhyde et de précondensats urée-formaldéhyde pour la formation des capsules d'aminoplastes.

19. Procédé suivant l'une au moins des revendications précédentes, caractérisé en ce qu'on utilise pour la formation des capsules d'aminoplastes, à côté de précondensats de mélamine-formaldéhyde et/ou de précondensats d'urée-formaldéhyde, d'autres matières formant des aminoplastes telles que des précondensats aldéhydiques à base de thiourée, de N-alkylurée, de guanidine, d'acéto-guanamine, de benzo-guanamine, de caproguanamine, de cyanamide, de dicyanodiamide et d'alkyl-/arylsulfonamide.

20. Procédé suivant l'une au moins des revendications 1 à 19, caractérisé en ce qu'on ajoute au système réactionnel aqueux pour abaisser sa viscosité, une quantité supplémentaire de précondensat mélamine-formaldéhyde sulfoné anionique hydrosoluble ou un composé B).

21. Procédé suivant l'une au moins des revendications précédentes, caractérisé en ce que le partenaire d'un système donnant une réaction colorée est dissous ou dispersé dans l'huile hydrophobe à encapsuler.
